(19) Europäisches Patentamt
European Patent Office
Office européen des brevets

(11) Numéro de publication: **0 187 589**
**B1**

(12) # FASCICULE DE BREVET EUROPEEN

(45) Date de publication du fascicule du brevet: **15.03.89**

(51) Int. Cl.⁴: **G21C 19/46,** G21F 9/00

(21) Numéro de dépôt: **85402520.2**

(22) Date de dépôt: **17.12.85**

(54) **Procédé de récupération de molybdène 99 à partir d'une cible d'alliage d'uranium irradié.**

(30) Priorité: **28.12.84 FR 8420011**

(43) Date de publication de la demande:
**16.07.86 Bulletin 86/29**

(45) Mention de la délivrance du brevet:
**15.03.89 Bulletin 89/11**

(84) Etats contractants désignés:
**BE DE GB**

(56) Documents cités:
**DE-A- 2 758 783**
**FR-A- 2 038 224**
**FR-A- 2 128 426**
**FR-A- 2 246 498**
**US-A- 3 821 351**

**CHEMICAL ABSTRACTS, vol. 83, 1975, page 706, résumé no. 157388u, Columbus, Ohio, US; V.K. GUPTA et al.: "Hydroxamic acids. XIV. Reactions of N-arylhydroxamic acids with metal ions" & J. INDIAN CHEM. SOC. 1975, 52(3), 267-8**

(73) Titulaire: **COMMISSARIAT A L'ENERGIE ATOMIQUE, 31/33, rue de la Fédération, F-75015 Paris(FR)**

(72) Inventeur: **Koehly, Gérard, 17, Allée des Primevères, F-91570 Bievres(FR)**
Inventeur: **Madic, Charles, 5 Place du Marché, F-94320 Thiais(FR)**

(74) Mandataire: **Mongrédien, André et al, c/o BREVATOME 25, rue de Ponthieu, F-75008 Paris(FR)**

**EP 0 187 589 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé de récupération du molybdène-99 produit par fission à partir d'une cible d'alliage d'uranium irradié.

De façon plus précise, elle concerne l'obtention de molybdène-99 destiné à la réalisation de générateurs de technétium-99m pour des utilisations médicales.

Parmi les radioisotopes utilisés en médecine nucléaire, le $^{99m}$Tc occupe une place prépondérante. Cependant, ce radioisotope a une période très courte ($t_{1/2}$=6 h) et de ce fait, il est livré aux hôpitaux sous la forme d'un générateur de $^{99m}$Tc chargé en $^{99}$Mo qui est l'élément-père de période plus longue ($t_{1/2}$=66 h).

Lors de la décroissance du $^{99}$Mo, on obtient du $^{99}$Tc qui s'accumule dans le générateur d'où il peut être élué sélectivement par une solution isotonique car $^{99}$Mo reste fixé sur l'alumine dans ces conditions. Après vieillissement, de nouvelles doses de $^{99}$Tc peuvent être récupérées par la même technique. La capacité d'absorption en molybdène-99 des colonnes d'alumine étant limitée, l'obtention de doses de $^{99m}$Tc de forte activité volumique nécessite l'absorption sur l'alumine de molybdène à forte teneur en $^{99}$Mo.

De ce fait, les techniques de production de $^{99}$Mo par activation neutronique du molybdène naturel, qui conduisent à un molybdène de faible activité spécifique, ont été abandonnées au profit des méthodes de production de $^{99}$Mo de fission, selon la réaction:

$^{235}$U (n, f) $^{99}$Mo

dont le rendement de fission est de 6,1%.

Le molybdène-99 ainsi produit étant destiné à des applications médicales, il est nécessaire de choisir judicieusement la nature de la cible soumise à l'irradiation, les conditions d'irradiation et la méthode de purification qui doit être performante et prendre en considération:

a) les problèmes importants de sûreté liés à la présence dans la cible de certains produits de fission tels que $^{131}$I, $^{132}$Te, $^{133}$Xe dont la chimie est délicate à maîtriser,

b) la nécessité d'obtenir un degré de pureté élevé du $^{99}$Mo requis pour les usages médicaux,

c) la nécessité d'obtenir un rendement de récupération du $^{99}$Mo le plus proche de 100%, et

d) la nécessité d'utiliser un temps global de mise en oeuvre minimal en raison de la période relativement courte du $^{99}$Mo.

Jusqu'à présent, les cibles utilisées ont été soit des cibles d'oxyde d'uranium, soit des cibles d'alliage d'uranium tels que U-Al.

L'une des méthodes utilisées pour récupérer le molybdène-99 à partir de ces cibles est de dissoudre la cible dans de l'acide chlorhydrique et d'extraire ensuite le molybdène-99 à partir de la solution obtenue au moyen d'acide di(2-éthylhexyl) phosphorique, soit par extraction liquide-liquide, soit par chromatographie d'extraction.

Ce procédé présente certains inconvénients: tout d'abord certains produits de fission tels que l'iode radioactif peuvent se dégager sous forme gazeuse à certaines étapes du procédé; par ailleurs, l'affinité de l'acide di(2-éthylhexyl) phosphorique pour l'uranium VI est importante, ce qui conduit à la coextraction de l'uranium VI et du molybdène 99.

Un autre procédé connu consiste à dissoudre une cible d'oxyde d'uranium irradié dans une solution d'acide sulfurique contenant de l'eau oxygénée, à séparer le molybdène-99 (VI) sur une colonne contenant du charbon actif dopé à l'argent, et à récupérer le $^{99}$Mo par élution au moyen d'une solution de soude (voir brevet US-A 3 940 318).

Cette technique présente aussi l'inconvénient de conduire à la volatilisation de l'iode radioactif en raison de la présence d'eau oxygénée, et de ne donner aucun moyen de séparation du tellure-132.

On connaît encore par le brevet FR-A 2 344 499 un procédé de récupération du molybdène-99 à partir de cibles d'alliage d'uranium-aluminium irradiées. Selon ce procédé, on dissout la cible irradiée dans une solution sodique, ce qui permet de faire passer le molybdène-99 en solution tout en gardant insoluble l'uranium et certains produits de fission. Après filtration, on ajoute au filtrat un réducteur de l'iode, une solution d'acide ($H_2SO_4$ ou HCl), puis du zinc ou de l'aluminium métallique et on ajuste le pH de la solution à 1 ou 2 M en ions $SCN^-$ de façon à transformer le molybdène en $[Mo(SCN)_6]^{3-}$ que l'on extrait ensuite par le di-sec-butyléther.

Cette technique permet ainsi de maintenir l'iode radioactif sous forme d'iodure en solution, mais elle ne résout pas les problèmes posés par le conditionnement de ces solutions actives, en particulier le conditionnement du tellure-132. En plus, elle conduit à la production d'effluents fortement concentrés en ions $SCN^-$ sensibles à la radiolyse, qui peuvent ainsi être convertis en ions cyanure, et elle nécessite l'emploi d'un solvant dangereux, le di-sec-butyléther dont le traitement sous forme d'effluents organiques contaminés est impraticable.

Ainsi, aucun des procédés connus ne permet de satisfaire facilement les impératifs mentionnés ci-dessus concernant les problèmes de sûreté, de pureté du molybdène-99 et d'utilisation d'un temps global minimal de mise en oeuvre du procédé.

La présente invention a précisément pour objet un procédé de récupération du molybdène-99 à partir d'une cible d'alliage d'uranium irradiée qui répond à ces impératifs.

Le procédé selon l'invention, de récupération du molybdène-99 à partir d'une cible d'alliage d'uranium irradiée, se caractérise en ce qu'il comprend les étapes successives suivantes:

a) dissoudre la cible d'alliage d'uranium irradiée dans de l'acide sulfurique,

b) séparer l'iode et le tellure présents dans la solution ainsi obtenue,

c) oxyder le molybdène-99 présent dans la solution en Mo(VI), et

d) extraire le molybdène-99 ainsi oxydé par un aci-

de hydroxamique de formule:

$$R - \overset{R'}{\underset{R'}{C}} - CO - NHOH \qquad (I)$$

dans laquelle R est un radical choisi dans le groupe comprenant les radicaux alkyle linéaires ou ramifiés, le radical phényle, les radicaux phényle substitués par au moins un radical alkyle, les radicaux arylalkyle et le radical cyclohexyle, et R' est un atome d'hydrogène ou un radical alkyle.

Dans ce procédé, le fait d'utiliser de l'acide sulfurique pour la dissolution permet d'éviter la formation d'iode élémentaire volatil en raison du pouvoir réducteur de la cible à dissoudre et de son inertie chimique.

En effet, lorsque la cible est constituée par un alliage d'uranium et d'aluminium, le potentiel imposé par la présence d'aluminium et d'uranium métalliques permet de transformer les composés d'iode en iodures qui restent en solution et ceux du tellure en tellure élémentaire qui précipitent. En revanche, le xénon se dégage lors de ce traitement, mais il peut être éliminé par piégeage sur charbon actif.

Dans le procédé de l'invention, l'utilisation d'un acide hydroxamique pour extraire le mobyldène-99 se révèle très avantageux car les acides hydroxamiques de formule I présentent une affinité et une sélectivité exceptionnelles pour le molybdène (VI), ce qui permet d'obtenir en fin d'opération un degré de pureté très élevé du molybdène-99 extrait.

Ainsi le procédé de l'invention permet de résoudre les problèmes de sûreté posés par le dégagement d'éléments radioactifs et d'obtenir un bon degré de pureté du molybdène en ne nécessitant pour sa mise en oeuvre qu'une durée relativement brève. Par ailleurs, il convient au traitement de cibles peu refroidies, par exemple sorties seulement depuis deux jours d'un réacteur nucléaire. Enfin il peut être mis en oeuvre à une échelle industrielle sans poser de problèmes insurmontables de traitement et de conditionnement des effluents produits.

Pour réaliser la dissolution, on utilise avantageusement un appareillage en tantale pour limiter la corrosion. Pour éviter les risques d'explosion et de rejets radioactifs, on effectue de préférence cette dissolution sous dépression et sous circulation d'un gaz inerte tel que l'azote ou l'argon. Le flux gazeux qui se charge en hydrogène dégagé par la réaction de dissolution et en xénon passe ensuite successivement dans un dispositif de lavage des gaz, sur des cartouches chargées en zéolithe à l'argent pour piéger l'iode éventuellement dégagé et sur des cartouches chargées en charbon actif afin de retenir les isotopes du xénon.

L'acide sulfurique utilisé est avantageusement constitué par une solution aqueuse contenant de 0,1 à 8 $mol \cdot l^{-1}$ d'acide sulfurique.

Après cette opération, on sépare l'iode et le tellure présents dans la solution de dissolution.

L'iode est de préférence séparé par précipitation. Dans ce but, on peut ajouter à la solution au moins un iodure inactif et un sel d'argent tel que le nitrate d'argent pour séparer l'iode sous forme de précipité d'iodure d'argent.

Le précipité peut être ensuite séparé de la solution par filtration.

Dans le cas du tellure, on peut séparer celui-ci également par précipitation en ajoutant à la solution du tellure inactif sous la forme de tellurite et un agent réducteur pour réduire le tellurite en tellure élémentaire que l'on sépare ensuite de la solution par filtration. L'agent réducteur peut être du $SO_2$, du bisulfite de sodium, un sel titaneux ($Ti^{3+}$) ou de l'aluminium. De préférence, on utilise de l'aluminium et on réalise simultanément la séparation de l'iode et du tellure par précipitation en ajoutant à la solution au moins un iodure inactif, du tellure inactif sous la forme de tellurite et de l'aluminium métallique, puis un sel d'argent.

Après cette opération de séparation de l'iode et du tellure, on réalise l'étape c), soit l'oxydation du molybdène-99 en Mo(VI). Ceci peut être obtenu en ajoutant un agent oxydant approprié à la solution, par exemple un sel ferrique, de l'eau oxygénée ou un persulfate $[S_2O_8]^{2-}$. De préférence, on utilise de l'eau oxygénée.

Après cette étape d'oxydation, on réalise l'étape d) d'extraction du molybdène-99 par l'acide hydroxamique en opérant de préférence par chromatographie d'extraction.

Dans ce but on peut utiliser une colonne de matériau adsorbant chargé par un solvant organique contenant l'acide hydroxamique et faire passer la solution contenant le molybdène-99 (VI) sur cette colonne.

On récupère ensuite le molybdène-99 par élution de la colonne au moyen d'une solution de carbonate d'ammonium.

De préférence, avant de réaliser l'élution, on lave la colonne par une solution acide telle qu'une solution d'acide sulfurique.

Après avoir acidifié l'éluat obtenu, on peut ensuite renouveler les opérations sur une deuxième colonne de chromatographie de dimensions plus réduites pour parfaire le degré de purification.

Le matériau adsorbant utilisé pour réaliser cette chromatographie d'extraction peut être du Kieselguhr, de l'alumine ou, de préférence, du gel de silice.

Le solvant organique est choisi en fonction de la nature de l'acide hydroxamique utilisé pour l'extraction. A titre d'exemple, ce solvant peut être constitué par du n-heptane, du benzène, du xylène, du mésitylène, du tétrachlorure de carbone ou du trichloroéthane; on peut aussi utiliser des alcools lourds ou des dérivés benzéniques substitués.

L'acide hydroxamique utilisé répond à la formule:

$$R - \overset{R'}{\underset{R'}{C}} - CO - NHOH \qquad (I)$$

dans laquelle R et R' ont la signification donnée ci-dessus.

Comme on l'a vu précédemment, R peut représenter un radical alkyle linéaire ou ramifié, le radical phényle, un radical phényle substitué par au moins un radical alkyle, un radical aryl-alkyle ou le radical cyclohexyle.

A titre d'exemple de radicaux alkyle susceptibles d'être utilisés, on peut citer les radicaux butyle, pentyle, hexyle, octyle, décyle et dodécyle.

Le radical aryl-alkyle peut être le radical tolyle.

Lorsqu'on utilise un radical phényle substitué par des radicaux alkyle, ceux-ci ont de préférence de 1 à 4 atomes de carbone.

Généralement, R représente un radical alkyle ayant de 4 à 8 atomes de carbone.

R' peut représenter un atome d'hydrogène ou un radical alkyle, le radical alkyle peut être linéaire ou ramifié; son nombre d'atomes de carbone est de préférence de 1 à 6.

Dans cette formule R et R' sont choisis de façon telle que l'acide hydroxamique présente une solubilité très faible dans l'eau et une bonne solubilité dans les solvants organiques. Cette condition est généralement remplie lorsque R et R' sont tels que le nombre d'atomes de carbone de l'acide est supérieur à 12.

A titre d'exemples d'acides hydroxamiques susceptibles de convenir, on peut citer les acides suivants:

– l'acide n-tétradécanohydroxamique de formule:

$n\text{-}C_{12}H_{15}\text{–}CH_2\text{–}CO\ NHOH$

– l'acide tri n-butyl acétohydroxamique de formule:

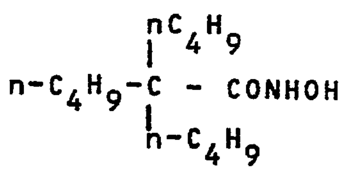

– l'acide tri i-butyl acétohydroxamique de formule:

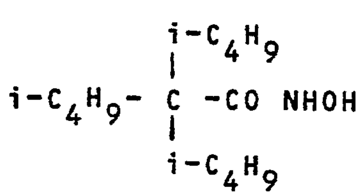

– l'acide tri n-pentyl acétohydroxamique de formule:

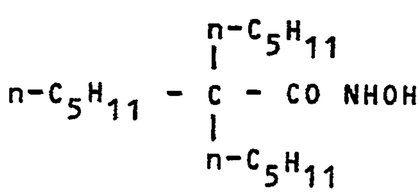

– l'acide 2,2'-diméthyl dodécano hydroxamique de formule:

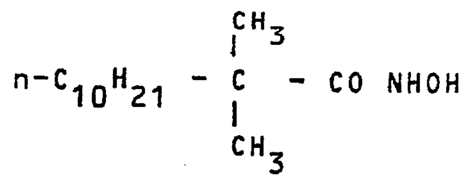

– l'acide 2,2'-diéthyl décano hydroxamique de formule:

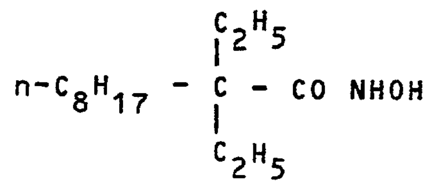

– l'acide 2,2'-dipropyl octano hydroxamique de formule:

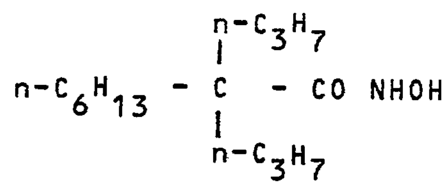

– l'acide 2,2',4-triéthyl octano hydroxamique de formule:

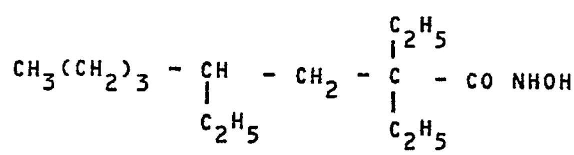

– l'acide n-dodécano hydroxamique de formule:

$n\text{-}C_{10}H_{21}\text{–}CH_2\text{–}CO\ NHOH$

– l'acide α,α'-dipropyl phényl acéto hydroxamique de formule:

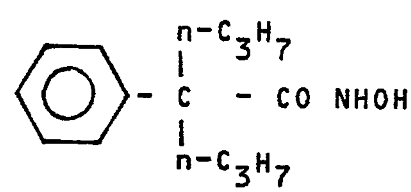

– l'acide α,α'-diméthyl S(2,4,6,-triméthyl phényl) propano hydroxamique de formule:

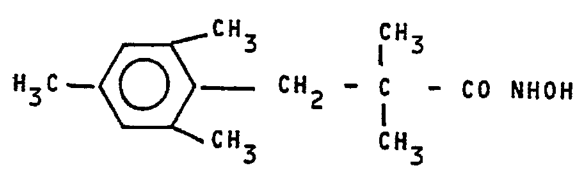

– l'acide α,α'-diéthyl S(p-tolyl) propano hydroxamique de formule:

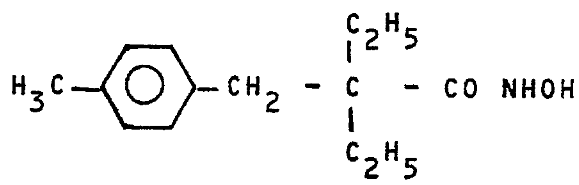

– l'acide α,α'-di n-propyl cyclohexyl acéto hydroxamique de formule:

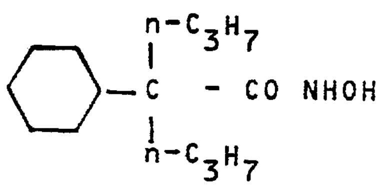

De préférence, on utilise l'acide tri n-butyl acéto hydroxamique.

Ces acides hydroxamique peuvent être préparés à partir des dérivés carboxyliques correspondants selon le schéma réactionnel suivant:

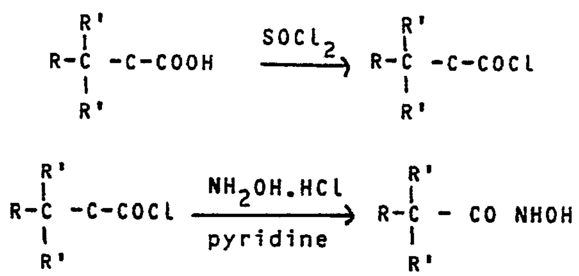


Les acides carboxyliques de départ peuvent être obtenus à partir de l'acétonitrile selon le schéma réactionnel suivant:

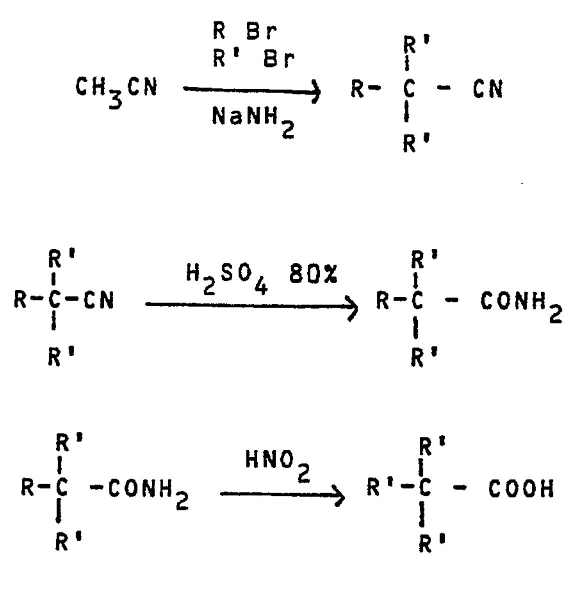


L'exemple suivant est donné bien entendu à titre non limitatif pour illustrer l'invention.

Cet exemple concerne la récupération du molybdène-99 à partir de 10 cibles de colaminés uranium-235-aluminium irradiés dans un réacteur nucléaire. Chaque cible est constituée d'environ 4 g d'uranium 235 et d'environ 35 g d'aluminium. Après irradiation d'une cible dans des conditions optimales, on aboutit à la formation d'environ 380 Ci de molybdène-99, soit une activité résiduelle après 8 jours de refroidissement de 50 Ci de molybdène-99. A sa sortie du réacteur, chaque cible contient environ 85 mg de produits de fission et environ 3,91 g d'uranium-235.

Ces produits de fission représentent une activité totale de 6550 Ci, qui passe après 48 h de refroidissement à 2563 Ci dont 366 Ci d'iode (iode-132 en équilibre avec le $^{132}$Te inclus), 174 Ci de $^{132}$Te, et 329 Ci de xénon, principalement représenté par du xénon-133. Les isotopes de l'iode et ceux du tellure représentent chacun environ 1 mg. Ainsi, pour le traitement de 10 cibles, on met en oeuvre sensiblement 25 600 Ci de produits de fission dont 3660 Ci d'iode, 1740 Ci de tellure et 3290 Ci de xénon.

On dissout les 10 cibles dans 10 l d'une solution acide sulfurique à 5,5 mol·l$^{-1}$ en utilisant un appareillage de dissolution en tantale. On obtient ainsi une solution contenant 1,5 mol·l$^{-1}$ d'aluminium, 4 g·l$^{-1}$ d'uranium 235 et environ 2500 Ci d'émetteurs β-γ par litre. Lors de la dissolution, il se produit un dégagement de 504 l d'hydrogène entraînant 3290 Ci de xénon. On effectue la dissolution sous dépression et sous circulation d'un gaz inerte, et à la sortie de l'appareillage de dissolution, on fait passer le flux gazeux successivement dans un dispositif de lavage de gaz, sur des cartouches chargées en zéolithe à argent pour retenir l'iode et sur des cartouches chargées en charbon actif afin de retenir les isotopes du xénon.

En fin de dissolution, on ajoute 130 mg·l$^{-1}$ d'iodures inactifs de sodium ou potassium pour diluer les 366 Ci·l$^{-1}$ d'iodures radioactifs provenant des fissions, qui représentent environ 1 mg·l$^{-1}$, on ajoute également du tellure inactif sous forme d'acide tellureux à raison de 130 mg·l$^{-1}$, et 2 g·l$^{-1}$ d'aluminium métallique. On réduit ainsi le tellurite en tellure élément, et on ajoute alors 1,5·10$^{-3}$ mol·l$^{-1}$ de nitrate d'argent, soit 1,62 g de nitrate d'argent pour les 10 l de solution, ce qui provoque la précipitation d'iodure d'argent. Les activités résiduelles de l'iode et du tellure en solution sont ainsi abaissées à moins d'une millicurie par litre. En revanche, les autres produits de fission restent en solution.

On filtre alors la solution et on récupère le résidu filtré contenant l'iode et le tellure pour le conditionner dans des conteneurs étanches qui sont entreposés pendant 3 mois avant d'être évacués au poste de traitement des déchets. Ceci permet de limiter la teneur en iode et en tellure à moins de 0,5 Ci par conteneur.

On soumet ensuite la solution à une oxydation pour transformer le molybdène (III) en molybdène (VI) et on lui ajoute dans ce but l'eau oxygénée à raison de 5·10$^{-2}$ mol·l$^{-1}$, ce qui conduit à une solution ayant une acidité proche de 1N. On extrait alors le molybdène contenu dans cette solution en utilisant

une colonne ayant un diamètre de 3 cm et une hauteur de 30 cm, garnie de gel de silice chargé à 30% en masse d'une solution contenant $5 \cdot 10^{-2}$ mol·l$^{-1}$ d'acide tributylacétohydroxamique dans du mésitylène. Après passage de la solution sur la colonne, on lave le gel de silice par environ 1 l de solution d'acide sulfurique 0,1 N, puis on élue le molybdène extrait sur la colonne au moyen d'une solution de carbonate d'ammonium à 10 g·l$^{-1}$.

On ajuste alors l'acidité du liquide recueilli à 1N par adjonction d'acide nitrique ou sulfurique, puis on l'introduit dans une deuxième colonne de chromatographie de dimensions plus réduites garnie également de gel de silice chargé à 30% en masse d'une solution à $5 \cdot 10^{-2}$ mol·l$^{-1}$ d'acice tributylacétohydroxamique dans du mésitylène. On réalise le même cycle de lavage, puis on élue la deuxième colonne avec une solution de carbonate d'ammonium à 10 g·l$^{-1}$ et on purifie le liquide recueilli par passage sur une colonne chargée de gel de silice chargé en dodécane pour éliminer les traces de produits organiques.

A la sortie de cette colonne, on obtient une solution de molybdène-99 sous forme de molybdate d'ammonium contenant 1800 Ci de molybdène-99 dans le cas d'un traitement intervenant après 48 h de refroidissement, et d'une durée de traitement de 24 h. Cette solution peut être utilisée directement pour charger un générateur de technétium comportant une colonne d'alumine sur laquelle est retenu le molybdène-99.

## Revendications

1. Procédé de récupération du molybdène-99 à partir d'une cible d'alliage d'uranium irradié, caractérisé en ce qu'il comprend les étapes successives suivantes:

a) dissoudre la cible d'alliage d'uranium irradié dans de l'acide sulfurique,

b) séparer l'iode et le tellure présents dans la solution ainsi obtenue,

c) oxyder le molybdène-99 présent dans la solution en Mo(VI), et

d) extraire le molybdène-99 ainsi oxydé par un acide hydroxamique de formule:

$$R - \overset{R'}{\underset{R'}{\overset{|}{\underset{|}{C}}}} - CO - NHOH \qquad (I)$$

dans laquelle R est un radical choisi dans le groupe comprenant les radicaux alkyle linéaires ou ramifiés, le radical phényle, les radicaux phényle substitués par au moins un radical alkyle, les radicaux aryl-alkyle et le radical cyclohexyle et R' est un atome d'hydrogène ou un radical alkyle.

2. Procédé selon la revendication 1, caractérisé en ce que dans l'étape d), on fait passer la solution obtenue dans l'étape c) sur une colonne d'un matériau adsorbant chargé par un solvant organique contenant l'acide hydroxamique.

3. Procédé selon la revendication 2, caractérisé en ce que le matériau adsorbant est du gel de silice.

4. Procédé selon l'une quelconque des revendications 2 et 3, caractérisé en ce que le solvant organique est le mésitylène.

5. Procédé selon l'une quelconque des revendications 2 à 4, caractérisé en ce que l'on récupère ensuite le molybdène-99 extrait par l'acide hydroxamique en réalisant une élution de la colonne au moyen d'une solution de carbonate d'ammonium.

6. Procédé selon l'une quelconque des revendications 2 à 4, caractérisé en ce que l'on lave le matériau adsorbant chargé d'acide hydroxamique ayant extrait le molybdène-99 au moyen d'une solution d'acide sulfurique, et en ce que l'on récupère ensuite le molybdène-99 en réalisant une élution de la colonne au moyen d'une solution de carbonate d'ammonium.

7. Procédé selon l'une quelconque des revendications 1 à 6, caractérisé en ce que l'acide hydroxamique est l'acide tributylacétohydroxamique.

8. Procédé selon la revendication 1, caractérisé en ce que l'on sépare l'iode par précipitation en ajoutant à la solution au moins un iodure inactif et un sel d'argent.

9. Procédé selon la revendication 1, caractérisé en ce que l'on sépare le tellure par précipitation en ajoutant à la solution du tellure inactif sous forme de tellurite et de l'aluminium métallique.

10. Procédé selon la revendication 1, caractérisé en ce que l'on oxyde le molybdène en Mo (VI) au moyen d'eau oxygénée.

11. Procédé selon la revendication 1, caractérisé en ce que dans l'étape a), on utilise une solution aqueuse contenant de 0,1 à 8 mol·l$^{-1}$ d'acide sulfurique.

12. Procédé selon l'une quelconque des revendications 1 à 11, caractérisé en ce que la cible est en alliage d'uranium et d'aluminium.

## Patentansprüche

1. Verfahren zur Rückgewinnung von Molybdän-99, ausgehend von einem Target aus einer bestrahlten Uranlegierung, dadurch gekennzeichnet, daß es die folgenden aufeinanderfolgenden Stufen umfaßt:

a) Auflösen des Targets aus der bestrahlten Uranlegierung in Schwefelsäure,

b) Abtrennen des Jods und des Tellurs, die in der dabei erhaltenen Lösung enthalten sind,

c) Oxidieren des in der Lösung vorhandenen Molybdäns-99 zu Mo(VI) und

d) Extrahieren des auf diese Weise oxidierten Molybdäns-99 mit einer Hydroxamsäure der Formel

$$R - \overset{R'}{\underset{R'}{\overset{|}{\underset{|}{C}}}} - CO - NHOH \qquad (I$$

in der R einen Rest, ausgewählt aus der Gruppe, die besteht aus linearen oder verzweigten Alkylresten, dem Phenylrest, durch mindestens einen Alkylrest substituierten Phenylresten, Alkylarylresten und dem Cyclohexylrest, und R' ein Wasserstoffatom oder einen Alkylrest bedeuten.

2. Verfahren nach Anspruch 1, dadurch gekennzeichnet, daß man in der Stufe d) die in der Stufe c) erhaltene Lösung über eine Säule aus einem Adsorptionsmaterial laufen läßt, das mit einem organischen Lösungsmittel beladen ist, das die Hydroxamsäure enthält.

3. Verfahren nach Anspruch 2, dadurch gekennzeichnet, daß es sich bei dem Adsorptionsmaterial um Silikagel handelt.

4. Verfahren nach einem der Ansprüche 2 und 3, dadurch gekennzeichnet, daß es sich bei dem organischen Lösungsmittel um Mesitylen handelt.

5. Verfahren nach einem der Ansprüche 2 bis 4, dadurch gekennzeichnet, daß man anschließend das mit Hydroxamsäure extrahierte Molybdän-99 zurückgewinnt, indem man die Säule mit einer Ammoniumcarbonatlösung eluiert.

6. Verfahren nach einem der Ansprüche 2 bis 4, dadurch gekennzeichnet, daß man das Adsorptionsmaterial, das mit Hydroxamsäure beladen ist, aus dem das Molybdän-99 mit einer Schwefelsäurelösung extrahiert worden ist, wäscht und daß man anschließend das Molybdän-99 zurückgewinnt, indem man die Säule mit einer Ammoniumcarbonatlösung eluiert.

7. Verfahren nach einem der Ansprüche 1 bis 6, dadurch gekennzeichnet, daß es sich bei der Hydroxamsäure um Tributylacetohydroxamsäure handelt.

8. Verfahren nach Anspruch 1, dadurch gekennzeichnet, daß man das Jod durch Ausfällung abtrennt, indem man zu der Lösung mindestens ein inaktives Jodid und ein Silbersalz zugibt.

9. Verfahren nach Anspruch 1, dadurch gekennzeichnet, daß man das Tellur durch Ausfällung abtrennt, indem man zu der Lösung inaktives Tellur in Form eines Tellurits und metallisches Aluminium zugibt.

10. Verfahren nach Anspruch 1, dadurch gekennzeichnet, daß man das Molybdänoxid mit Wasserstoffperoxid zu Mo(VI) oxidiert.

11. Verfahren nach Anspruch 1, dadurch gekennzeichnet, daß man in der Stufe a) eine wäßrige Lösung verwendet, die 0,1 bis 8 Mol/l Schwefelsäure enthält.

12. Verfahren nach einem der Ansprüche 1 bis 11, dadurch gekennzeichnet, daß das Target aus einer Uran-Aluminium-Legierung besteht.

## Claims

1. Process for the recovery of molybdenum-99 from an irradiated uranium alloy target, characterized in that it comprises the following stages:

a) dissolving the irradiated uranium alloy target in sulphuric acid,

b) separating the iodine and tellurium present in the thus obtained solution,

c) oxidizing the molybdenum-99 present in the Mo(VI) solution, and

d) extracting the thus oxidized molybdenum-99 with a hydroxamic acid of formula:

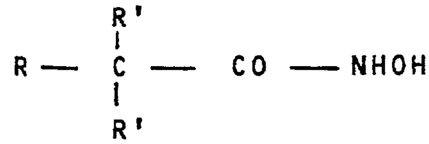

(I)

in which R is a radical chosen from the group including straight or branched-chain alkyl radicals, the phenyl radical, phenyl radicals substituted by at least one alkyl radical, arylalkyl radicals and the cyclohexyl radical and R' is a hydrogen atom or an alkyl radical.

2. Process according to claim 1, characterized in that in stage d), the solution obtained in stage c) is passed on to a column of an absorbent material charged with an organic solvent containing hydroxamic acid.

3. Process according to claim 2, characterized in that the absorbent material is silica gel.

4. Process according to either of the claims 2 and 3, characterized in that the organic solvent is mesitylene.

5. Process according to any one of the claims 2 to 4, characterized in that this is followed by the recovery of the molybdenum-99 extracted by hydroxamic acid by carrying out an elution of the column by means of an ammonium carbonate solution.

6. Process according to any one of the claims 2 to 4, characterized in that the hydroxamic acid-charged absorbent material which has extracted the molybdenum-99 is washed by means of a sulphuric acid solution and the molybdenum-99 is then recovered by carrying out an elution of the column with an ammonium carbonate solution.

7. Process according to any one of the claims 1 to 6, characterized in that the hydroxamic acid is tributyl acetohydroxamic acid.

8. Process according to claim 1, characterized in that the iodine is separated by precipitation by adding to the solution at least one inactive iodide and a silver salt.

9. Process according to claim 1, characterized in that the tellurium is separated by precipitation by adding to the solution inactive tellurium in the form of tellurite and metallic aluminium.

10. Process according to claim 1, characterized in that the molybdenum is oxidized into Mo(VI) by means of hydrogen peroxide.

11. Process according to claim 1, characterized in that in stage a), use is made of an aqueous solution containing 0.1 to 8 $mol \cdot l^{-1}$ of sulphuric acid.

12. Process according to any one of the claims 1 to 11, characterized in that the target is a uranium-aluminium alloy.